# EUROPÄISCHE PATENTANMELDUNG

(11) **EP 1 967 944 A1**
(43) Veröffentlichungstag der Anmeldung: **10.09.2008**
(21) Anmeldenummer: 08002508.3
(22) Anmeldetag: 12.02.2008
(51) Int. Cl.: G06F 3/048

(54) **Verfahren zur Korrektur von elektronisch erfassten handschriftlichen Notizen**

(30) Priorität: 08.03.2007 DE 102007011574
(71) Anmelder: SRS-Management GmbH, 64625 Bensheim (DE)
(72) Erfinder: Strauß, Thomas, 60385 Frankfurt am Main (DE); Hinlang, Sascha, 69214 Eppelheim (DE)
(74) Vertreter: Katscher Habermann Patentanwälte

(57) **Zusammenfassung**

Bei einem Verfahren zur Korrektur von elektronisch erfassten handschriftlichen Notizen, wobei die mit einem Digital Pen in einem Formularfeld geschriebenen Notizen in mehrere zeitgeordnete Strichobjekte mit jeweils mehreren Stützpunkten überführt und an eine elektronische Datenverarbeitungsanalage übermittelt werden, um anschließend die Strichobjekte mit einem Handschrifterkennungsverfahren auszuwerten, wird in einem ersten Verfahrensschritt ein Korrekturstrichobjekt ermittelt wird, werden in einem nachfolgenden Verfahrensschritt zu korrigierende Strichobjekte (2, 3, 4) ermittelt, die dem Korrekturstrichobjekt zugeordnet werden können und werden in einem anschließenden Verfahrensschritt das Korrekturstrichobjekt und die diesem Korrekturstrichobjekt zugeordneten, zu korrigierenden Strichobjekte (2, 3, 4) als gelöschte Strichobjekte (2, 3, 4) markiert, die nicht mit dem Handschrifterkennungsverfahren ausgewertet werden. Zur Ermittlung eines Korrekturstrichobjekts ein Wahrscheinlichkeitswert für die Übereinstimmung des Strichobjekts mit einem vorgegebenen Korrekturzeichen bestimmt wird.

## Beschreibung

Die Erfindung betrifft ein Verfahren zur Korrektur von elektronisch erfassten handschriftlichen Notizen, wobei die mit einem Digital Pen in einem Formularfeld geschriebenen handschriftlichen Notizen in mehrere zeitgeordnete Strichobjekte mit jeweils mehreren Stützpunkten überführt und an eine elektronische Datenverarbeitungsanlage übermittelt werden, um anschließend die Strichobjekte mit einem Handschrifterkennungsverfahren auszuwerten.

Das Korrigieren mit Korrekturstrichen ist unabhängig von der verwendeten Sprache, bzw. Schrift ein weltweit bekanntes Verfahren, um handschriftlich Notizen zu korrigieren. Die zu korrigierenden Worte, bzw. Schriftzeichen werden dabei üblicherweise durchgestrichen und gegebenenfalls durch die richtigen Schriftzeichen, bzw. durch die zutreffenden Worte ersetzt.

Dieses sehr einfache und unmittelbar verständliche Verfahren zur handschriftlichen Korrektur von Notizen lässt sich allerdings nicht ohne weiteres auf elektronisch erfasste handschriftliche Notizen übertragen.

Aus der Praxis sind keine Handschrifterkennungsverfahren bekannt, die eine Korrektur elektronisch erfasster handschriftlicher Notizen durch Korrekturstriche, bzw. durch Durchstreichen der zu korrigierenden Abschnitte zulässt, bzw. die derartige Korrekturen zuverlässig erkennen und auswerten könnten.

Verwendet der Benutzer Korrekturstriche und streicht beispielsweise einzelne Buchstaben der handschriftlichen Notizen durch, so können die bekannten Handschrifterkennungsverfahren die betreffenden durchgestrichenen Buchstaben nicht mehr mit ausreichender Wahrscheinlichkeit als solche erkennen, so dass es zu Fehlinterpretationen und einer deutlich abnehmenden Erkennungsrate bei der elektronischen Erfassung der handschriftlichen Notizen kommt. Dies kann darauf zurück geführt werden, dass bei Verwendung des lateinischen Alphabetes die Erkennungsraten von 26 Großbuchstaben bzw. 26 Kleinbuchstaben noch akzeptabel sind, während eine Unterscheidung und zuverlässige Erkennung der einzelnen Buchstaben erheblich vermindert wird und damit zu einer in der Praxis untauglichen niedrigen Erkennungsrate führt, wenn zusätzlich 26 durchgestrichene Großbuchstaben und 26 durchgestrichene Kleinbuchstaben erkannt und unterschieden werden müssen.

Obwohl die in der Praxis bekannten Handschrifterkennungsverfahren mit komplexen Algorithmen und einem großen Aufwand sowohl graphische Bildinformationen (Optical Character Recognition OCR) als auch mathematische Verfahren zur Auswertung von Vektorisierungsdaten (Intelligent Character Recognition ICR) verwenden, ist eine zuverlässige Erkennung und Auswertung von Korrekturstrichen derzeit nicht bekannt. In vielen Fällen wird stattdessen eine Korrektur der handschriftlichen Notizen ausschließlich durch entsprechende Korrekturbefehle bzw. durch die Verwendung eindeutig erkennbarer, gesondert vermerkter Korrekturzeichen ermöglicht. Derartige Korrekturverfahren sind beispielsweise bei Verwendung eines Tablet-PCs möglich und zweckmäßig, da die Auswirkungen der gesondert vermerkten Korrekturbefehle auf die elektronische Erfassung der handschriftlichen Notizen unmittelbar beobachtet und überprüft werden können.

Für die elektronische Erfassung von handschriftlichen Notizen können Digital Pens verwendet werden. Als Digital Pens werden beispielsweise von dem schwedischen Unternehmen Anoto Group AB entwickelte Kugelschreiber bezeichnet, die neben einer Kugelschreibermine eine zusätzliche Digitalkamera zum Filmen der Papieroberfläche aufweisen, über die sich der Kugelschreiber beim Schreiben bewegt. Wird mit dem Digital Pen auf einem Spezialpapier mit einem für das menschliche Auge fast unsichtbaren Muster geschrieben, so kann die in dem Kugelschreiber integrierte Digitalkamera die mit dem Kugelschreiber erzeugten handschriftlichen Notizen auf dem Spezialpapier erfassen. Die handschriftlichen Notizen werden dann in Vektorgrafiken umgesetzt, die beispielsweise mit bekannten Handschrifterkennungsverfahren ausgewertet und in digitale Textinformationen überführt werden können. Der Digital Pen besitzt eine Zeitstempelfunktion, so dass nicht nur die handschriftlichen Notizen elektronisch erfasst werden können, sondern auch jeder einzelne Erfassungsvorgang zeitlich bestimmt und eingeordnet werden kann. Zu diesem Zweck wird bei einer Handschrifterfassung die aktuelle Zeitinformation abgerufen und zusammen mit den elektronisch erfassten Handschriftinformationen abgespeichert, bzw. zur weiteren Auswertung an eine elektronische Datenverarbeitungsanlage übermittelt.

Bei der elektronischen Erfassung handschriftlicher Notizen mit einem Digital Pen werden die handschriftlichen Notizen in mehrere Strichobjekte unterteilt, die jeweils mehrere Stützpunkte aufweisen. Jedes Strichobjekt wird durch die zugeordnete Liste von Stützpunkten eindeutig beschrieben. Ein Strichobjekt ist dabei üblicherweise als diejenige Linie definiert, die bei dem Schreiben mit dem Digital Pen vom Aufsetzen bis zu einem nachfolgenden Anheben der Stiftspitze des Digital Pens gezogen wird. Da bei einem Digital Pen keine unmittelbare Anzeige der elektronisch erfassten handschriftlichen Notizen möglich ist, müssen eventuell eingesetzte Korrekturverfahren möglichst eindeutige und zuverlässige Ergebnisse liefern.

Aufgabe der vorliegenden Erfindung ist es, ein Verfahren zur Korrektur gemäß der eingangs genannten Gattung so auszugestalten, dass eine zuverlässige Korrektur der handschriftlichen Notizen mit üblicherweise verwendeten Korrekturstrichen ermöglicht wird.

Diese Aufgabe wird erfindungsgemäß dadurch gelöst, dass in einem ersten Verfahrensschritt ein Korrekturstrichobjekt ermittelt wird, dass in einem nachfolgenden Verfahrensschritt zu korrigierende Strichobjekte ermittelt werden, die dem Korrekturstrichobjekt zugeordnet werden können und dass in einem anschließenden Verfahrensschritt das Korrekturstrichobjekt und die diesem Korrekturstrichobjekt zugeordneten, zu korrigierenden Strichobjekte als gelöschte Strichobjekte markiert werden, die nicht mit dem Handschrifterkennungsverfahren ausgewertet werden.

Es hat sich gezeigt, dass die Erkennungsraten bei der elektronischen Erfassung von handschriftlichen Notizen mit Korrekturvermerken erheblich gesteigert werden können, wenn die handschriftlichen Korrekturen bereits bei der Auswertung und Zusammenstellung der von einem Digital Pen erzeugten Strichobjekte berücksichtigt werden. Die zu korrigierenden Schriftzeichen, bzw. die entsprechenden Strichobjekte werden nach deren Erfassung gelöscht, bzw. als zu korrigierende Strichobjekte erkannt und entsprechend gekennzeichnet. Da die gelöschten, bzw. entsprechend gekennzeichneten Strichobjekte nicht mehr bei dem nachfolgend durchgeführten Handschrifterkennungsverfahren den Schrifterkennungsprozess durchlaufen, ist keine Korrektur der handschriftlichen Notizen im Rahmen der Handschrifterkennung mehr erforderlich. Die bereits bekannten und in der Praxis bewährten Handschrifterkennungsverfahren können schnell und mit akzeptablen Erkennungsraten durchgeführt werden.

Die Ermittlung von Korrekturstrichobjekten und zugeordneten, zu korrigierenden Strichobjekten kann durch die Vorgabe geeigneter Anforderungen an die Korrekturstrichobjekte erleichtert werden. Es ist ebenso denkbar, im Rahmen eines interaktiven Lernprozesses eine persönliche Anpassung des Korrekturverfahrens an einen Nutzer durchzuführen und die Ermittlung der Korrekturstrichobjekte sowie der zu korrigierenden Strichobjekte auf empirischer Basis vorzunehmen, bzw. kontinuierlich zu verbessern.

Vorzugsweise ist vorgesehen, dass zur Ermittlung eines Korrekturstrichobjekts ein Wahrscheinlichkeitswert für die Übereinstimmung des Strichobjekts mit einem vorgegebenen Korrekturstrichobjekt bestimmt wird. Für jedes Strichobjekt wird dabei überprüft, ob die Anzahl und Anordnung der von dem Digital Pen erzeugten Stützpunkten mit einer vorgegebenen Anzahl und Anordnung von Stützpunkten des gewählten Korrekturzeichens übereinstimmt. Es hat sich gezeigt, dass dabei auch Durchstriche als mögliches Korrekturzeichen, bzw. als Korrekturstrichobjekt verwendet und zuverlässig erkannt werden können.

Ein Durchstrich stellt dabei einen geraden, möglichst waagerechten Strich dar. Je nach der Handschrift des Nutzers können dabei auch von einer Waagerechten abweichende Durchstriche oder sogar gekrümmte Durchstriche erkannt und für die Korrektur der handschriftlichen Notizen berücksichtigt werden.

Um die Verfahrensdauer zu verkürzen ist vorgesehen, dass für Strichobjekte mit einem Wahrscheinlichkeitswert oberhalb eines vorgegebenen Schwellenwertes Schnittpunkte mit anderen Strichobjekten ermittelt und ausgewertet werden. Indem nur diejenigen Strichobjekte bei der Berechnung und Auswertung von Schnittpunkten mit anderen Strichobjekten berücksichtigt werden, die ausgehend von dem berechneten Wahrscheinlichkeitswert mit großer Wahrscheinlichkeit ein Korrekturstrichobjekt darstellen, kann die Verfahrensdauer erheblich gesenkt werden. Die Vorgab eines geeigneten Schwellenwertes kann empirisch, bzw. in Abhängigkeit der jeweiligen Handschrift erfolgen.

Gemäß einer vorteilhaften Ausgestaltung des Erfindungsgedankens ist vorgesehen, dass die relative Anordnung der Strichobjekte innerhalb des Formularfeldes ermittelt und ausgewertet wird. So kann beispielsweise im Rahmen der Auswertung vorgegeben werden, dass nur diejenigen Strichobjekte als potenzielle Korrekturstrichobjekte in Betracht gezogen werden, die in einem Bereich mittlerer Höhe innerhalb des Formularfeldes angeordnet sind. Im unteren Bereich des Formularfeldes angeordnete waagerechte Strichobjekte könnten beispielsweise als Unterstreichen und damit als Hervorhebung gedeutet und sollten nicht als Korrekturzeichen interpretiert werden.

Es hat sich gezeigt, dass bei einer kumulativen Berücksichtigung des Wahrscheinlichkeitswertes für die geometrische Übereinstimmung mit einem vorgegebenen Korrekturzeichen, der Auswertung von Schnittpunkten mit anderen Strichobjekten und der Berücksichtigung der relativen Anordnung eine sehr zuverlässige und mit angemessenem Zeitaufwand durchführbare Erkennung handschriftlicher Korrekturen ermöglicht.

Um die zu korrigierenden, bzw. die von dem Nutzer verworfenen Strichobjekte schnell und zuverlässig identifizieren zu können, ist vorgesehen, dass ausgehend von dem Korrekturstrichobjekt eine Korrekturfläche bestimmt wird und der Schwerpunkt der Strichobjekte relativ zu der Korrekturfläche ermittelt und ausgewertet wird. Eine geeignete Korrekturfläche könnte beispielsweise in waagerechter Richtung durch die Abmessungen des Korrekturstrichobjekts und in vertikaler Richtung durch die aus der Handschrift ermittelte Zeilenhöhe definiert werden. Gute Korrekturergebnisse werden erreicht, wenn diejenigen Strichobjekte ausgewählt und in Zusammenhang mit der Korrektur als relevant angesehen werden, deren Schwerpunkt innerhalb der vorausgehend ermittelten Korrekturfläche liegt. Der Schwerpunkt eines Strichobjekts kann dabei in bekannter Weise als Schwerpunkt des durch die einzelnen Stützpunkte des Strichobjekts definierten Polygons berechnet werden.

Werden ausgehend von dem Korrekturstrichobjekt alle zeitlich vorangehenden Strichobjekte ermittelt und in Zusammenhang mit der Korrektur ausgewertet, so kann auf diese Weise erreicht werden, dass zeitlich nach dem Korrekturstrichobjekt erzeugte Strichobjekte auch innerhalb des Bereichs der Korrekturfläche wieder als valide und demzufolge als nicht zu korrigierende bzw. zu löschende Strichobjekte erkannt und für die nachfolgende Handschrifterkennung berücksichtigt werden können. In dem zusätzlich die von einem Digital Pen gelieferten Zeitinformationen zu den einzelnen Strichobjekten ausgewertet werden, kann das Korrekturverfahren flexibler und zuverlässiger durchgeführt werden.

Natürlich können die vorangehenden Verfahrensschritte wiederholt durchgeführt werden, bis alle Korrekturstrichobjekte ermittelt und zusammen mit den zugeordneten Strichobjekten als gelöscht markiert sind.

Nachfolgend werden Ausführungsbeispiele näher erläutert, die in der Zeichnung dargestellt sind. Es zeigt:
Fig. 1 ein Verfahren zur Korrektur von elektronisch erfassten handschriftlichen Notizen ohne die Berücksichtigung zeitlicher Informationen,
Fig. 2 ein vergleichbares Verfahren zur Korrektur handschriftlicher Notizen, wobei zeitliche Informationen zu einzelnen Strichobjekten ermittelt und ausgewertet werden,
Fig. 3 eine schematische Darstellung für die Anwendung des Verfahrens zur Korrektur handschriftlicher Notizen bei der Auswertung von Auswahlfeldern.

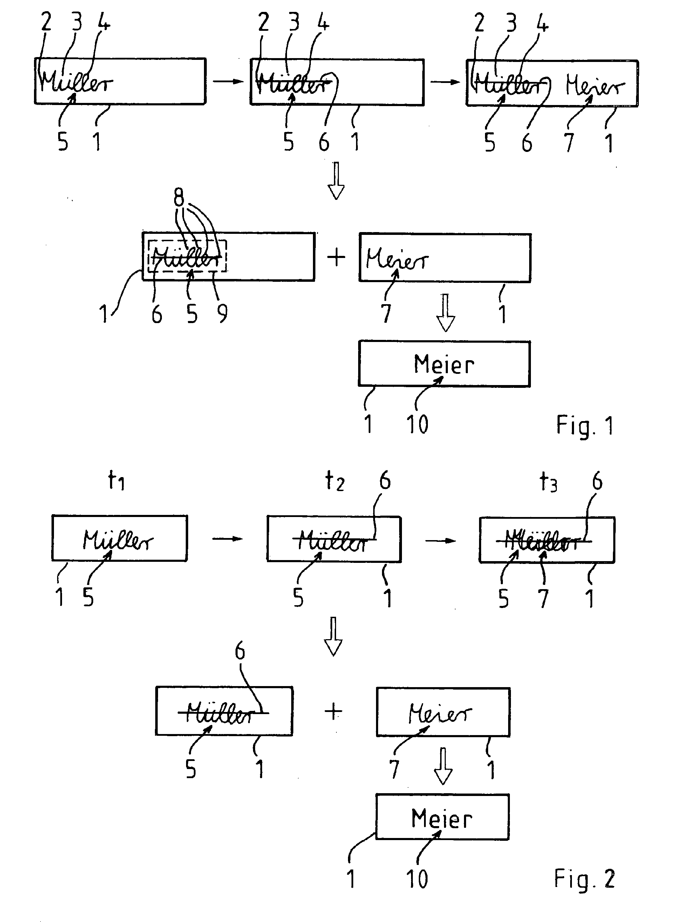

In Fig. 1 wird in einem oberen Bereich exemplarisch dargestellt, wie ein Nutzer in einem Formularfeld 1 eine aus mehreren Strichobjekten 2, 3, 4 bestehende handschriftliche Notiz 5 einträgt. Die handschriftliche Notiz 5 wird anschließend mit einem Durchstrich 6 durchgestrichen und als zu korrigierende Notiz 5 gekennzeichnet.

Eine zutreffende Notiz 7 wird im Anschluss an die durchgestrichene Notiz 5 in dem Formularfeld 1 vermerkt.

Bei Anwendung des erfindungsgemäßen Verfahrens zur Korrektur der in dem Formularfeld 1 eingetragenen handschriftlichen Notizen 5, 7 wird zunächst der Durchstrich 6 als Korrekturstrichobjekt ermittelt. Die Strichobjekte 2, 3, 4 weisen jeweils Schnittpunkte 8 mit dem Durchstrich 6 auf. Der nicht dargestellte Schwerpunkt der Strichobjekte 2, 3, 4 liegt weiterhin innerhalb einer gestrichelt dargestellten Korrekturfläche 9. Die Strichobjekte 2, 3, 4 werden deshalb bei Anwendung des Korrekturverfahrens als zu korrigierende Strichobjekte 2, 3, 4 ermittelt, die dem Korrekturstrichobjekt mit dem Durchstrich 6 zugeordnet werden können und deshalb zusammen mit dem Durchstrich 6 als gelöschte Strichobjekte 2, 3, 4 markiert werden.

Lediglich die zutreffende Notiz 7, die nicht von dem Durchstrich 6 erfasst oder betroffen ist, wird einem Handschrifterkennungsverfahren zugeführt und in eine elektronisch erfasste Textzeichenkette 10 umgewandelt. Da bei der Anwendung des Handschrifterkennungsverfahrens keinerlei Korrekturen mehr zu berücksichtigen sind, können die aus der Praxis bekannten Handschrifterkennungsverfahren angewendet werden und führen zu akzeptablen, bzw. in der Praxis ausreichenden Ergebnissen.

Bei dem in Fig. 2 schematisch beschriebenen Ausführungsbeispiel werden zusätzlich die zeitlichen Informationen zu den einzelnen Notizen 5, 7, bzw. den Strichobjekten 2, 3, 4 und dem Durchstrich 6 berücksichtigt. In Übereinstimmung mit dem in Fig. 1 dargestellten und in diesem Zusammenhang beschriebenen Ablauf wird zu einem Zeitpunkt t1 die handschriftliche Notiz 5 in dem Formularfeld 1 vermerkt. Im Anschluss daran wird zu einem späteren Zeitpunkt t2 die Notiz 5 mit einem Durchstrich 6 durchgestrichen und als zu korrigierende Notiz 5 vermerkt. Da für das im Anschluss daran durchgeführte Korrekturverfahren lediglich diejenigen Strichobjekte 2, 3, 4 berücksichtigt werden, die zeitlich vor der Anbringung des Durchstrichs 6, also zeitlich vor t2 in dem Formularfeld 1 vermerkt wurden, kann die zutreffende Notiz 7 zu einem späteren Zeitpunkt t3 auch wieder innerhalb der Korrekturfläche 9 und sogar unmittelbar über der zu korrigierenden Notiz 5 eingetragen werden.

Bei der Durchführung des Korrekturverfahrens wird dann festgestellt, dass die zutreffende Notiz 7 zu einem Zeitpunkt t3 und damit zeitlich nach dem Durchstreichen zum Zeitpunkt t2 der zu korrigierenden Notiz 5 vermerkt wurde und deshalb nicht als gelöscht markiert werden soll. Die zutreffende Notiz 7 wird deshalb während des Korrekturverfahrens nicht weiter berücksichtigt, obwohl die zutreffende Notiz 7 Schnittpunkte mit dem Durchstrich 6 aufweist und der Schwerpunkt einzelner Strichobjekte der zutreffenden Notiz 7 innerhalb der Korrekturfläche 9 liegt.

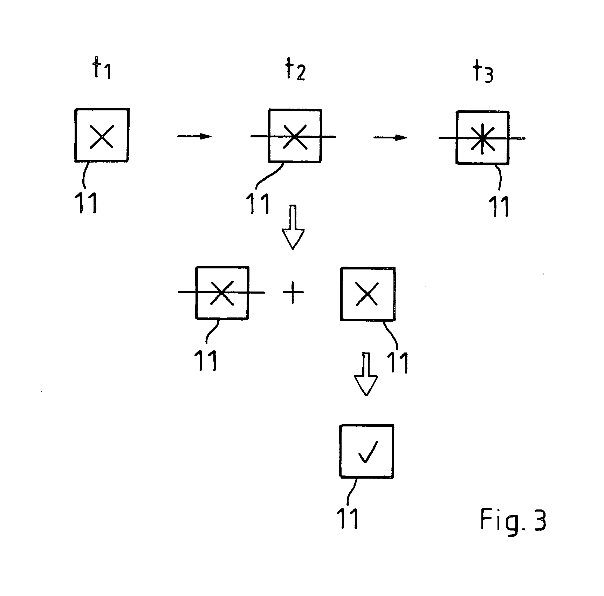

In Fig. 3 ist schematisch dargestellt, wie die elektronische Erfassung und Auswertung eines handschriftlich ausgefüllten Auswahlfeldes 11 erfolgen kann. Bei Berücksichtigung der zeitlichen Informationen kann mit dem erfindungsgemäßen Korrekturverfahren schnell und zuverlässig entschieden werden, ob das Auswahlfeld 11 trotz mehrfachen Überschreibens, bzw. Korrigierens als ausgewählt oder aber als nicht ausgewählt markiert werden soll. Zwar wird durch das Durchstreichen zu einem Zeitpunkt t2 die zum Zeitpunkt t1 vorausgegangene Markierung des Auswahlfeldes 11 korrigiert und damit gelöscht, jedoch beeinflusst dies nicht die zu einem späteren Zeitpunkt t3 vorgenommene erneute Markierung des Auswahlfeldes 11, so dass nach der Durchführung des Handschrifterkennungsverfahrens das Auswahlfeld 11 zutreffend als markiert, bzw. als ausgewählt erkannt und vermerkt wird.

## Patentansprüche

1. Verfahren zur Korrektur von elektronisch erfassten handschriftlichen Notizen, wobei die mit einem Digital Pen in einem Formularfeld geschriebenen Notizen in mehrere zeitgeordnete Strichobjekte mit jeweils mehreren Stützpunkten überführt und an eine elektronische Datenverarbeitungsanalage übermittelt werden, um anschließend die Strichobjekte mit einem Handschrifterkennungsverfahren auszuwerten, **dadurch gekennzeichnet, dass** in einem ersten Verfahrensschritt ein Korrekturstrichobjekt ermittelt wird, dass in einem anschließenden Verfahrensschritt zu korrigierende Strichobjekte (2, 3, 4) ermittelt werden, die dem Korrekturstrichobjekt zugeordnet werden können und dass in einem anschließenden Verfahrensschritt das Korrekturstrichobjekt und die diesem Korrekturstrichobjekt zugeordneten, zu korrigierenden Strichobjekte (2, 3, 4) als gelöschte Strichobjekte (2, 3, 4) markiert werden, die nicht mit dem Handschrifterkennungsverfahren ausgewertet werden.

2. Verfahren nach Anspruch 1, **dadurch gekennzeichnet, dass** zur Ermittlung eines Korrekturstrichobjekts ein Wahrscheinlichkeitswert für die Übereinstimmung des Strichobjekts mit einem vorgegebenen Korrekturzeichen bestimmt wird.

3. Verfahren nach Anspruch 2, **dadurch gekennzeichnet, dass** für die Strichobjekte mit einem Wahrscheinlichkeitswert oberhalb eines vorgegebenen Schwellenwertes Schnittpunkte (8) mit anderen Strichobjekten (2, 3, 4) ermittelt und ausgewertet werden.

4. Verfahren nach einem der vorangehenden Ansprüche, **dadurch gekennzeichnet, dass** die relative Anordnung der Strichobjekte (2, 3, 4) innerhalb des Formularfeldes (1) ermittelt und ausgewertet wird.

5. Verfahren nach einem der vorangehenden Ansprüche, **dadurch gekennzeichnet, dass** ausgehend von dem Korrekturstrichobjekt eine Korrekturfläche (9) bestimmt wird und dass der Schwerpunkt der Strichobjekte (2, 3, 4) relativ zu der Korrekturfläche (9) ermittelt und ausgewertet wird.

6. Verfahren nach einem der vorangehenden Ansprüche, **dadurch gekennzeichnet, dass** ausgehend von dem Korrekturstrichobjekt alle zeitlich vorangehenden Strichobjekte (2, 3, 4) ermittelt und ausgewertet werden.

7. Verfahren nach einem der vorangehenden Ansprüche, **dadurch gekennzeichnet, dass** die vorangehenden Verfahrensschritte wiederholt werden, bis alle Korrekturstrichobjekte ermittelt und zusammen mit den zugeordneten Strichobjekten (2, 3, 4) als gelöscht markiert sind.
